# EUROPEAN PATENT APPLICATION

(11) **EP 4 632 198 A1**
(43) Date of publication of application: **15.10.2025**
(21) Application number: 24830862.9
(22) Date of filing: 27.06.2024
(51) Int. Cl.: F01P 7/16, F01P 5/12, F01P 11/14

(54) **CONTROL METHOD AND APPARATUS FOR ELECTRONIC MAIN WATER PUMP OF ENGINE, AND STORAGE MEDIUM**

(30) Priority: 28.06.2023 CN 202310773536
(71) Applicant: Chongqing Changan Automobile Co., Ltd., Chongqing 400023 (CN)
(72) Inventor: CHEN, Xuping, Chongqing 400023 (CN); HU, Xianli, Chongqing 400023 (CN); KAO, Pochun, Chongqing 400023 (CN)
(74) Representative: Keller Schneider Patent- und Markenanwälte AG
(86) International application number: PCT/CN2024/101897
(87) International publication number: WO 2025/002229

(57) **Abstract**

The present application relates to the technical field of engine control, and particularly provides a control method and apparatus for an electronic main water pump of an engine, and a storage medium. The method comprises: S1, obtaining a first parameter set and knocking compensation parameters, on the basis of the first parameter set and the knocking compensation parameters, determining whether an electronic main water pump can start closed-loop control based on a target water temperature, and if yes, performing S2; S2, on the basis of the current engine state, determining whether a condition for enabling a knocking compensation function is met; if the determination result is yes, performing S3, and if the determination result is no, performing S5; S3, on the basis of the current output offset of the electronic main water pump, determining whether to carry out knocking compensation, if the output offset of the electronic main water pump is greater than a preset value, carrying out knocking compensation, and performing S4; otherwise, performing S5; S4, switching the closed-loop control based on the target water temperature to open-loop control based on the target water temperature; and S5, starting an open-loop control strategy based on the target water temperature. In this way, the objective of improving the cooling intensity and the thermal efficiency of the engine is achieved.

## Description

The present application claims priority to Chinese patent application No.202310773536.6, entitled "CONTROL METHOD AND APPARATUS FOR ELECTRONIC MAIN WATER PUMP OF ENGINE, AND STORAGE MEDIUM", filed with the China National Intellectual Property Administration on June 28, 2023, the disclosure of which is hereby incorporated by reference in its entirety.

### Technical field

The present application relates to the technical field of engine control, and specifically to a control method and apparatus for an electronic main water pump of an engine, and a storage medium.

### Background

An electronic main water pump of an engine controls the flow rate or speed of the electronic main water pump through closed-loop correction of a target coolant temperature of the engine, thereby precisely controlling an actual coolant temperature to follow the target coolant temperature. To enhance the thermal efficiency of the engine, a technological combination of the Atkinson cycle, a high compression ratio, and an electronic main water pump is widely adopted. Compared with conventional mechanical water pumps, the electronic main water pump can provide optimal cooling flow and intensity based on operating conditions of the engine, thereby minimizing unnecessary energy losses. For engines using the Atkinson cycle with high compression ratios, current design and control strategies of electronic main water pumps prioritize full-power, maximum-flow operation only under high-temperature, high-speed, and high-load conditions to meet cooling demands. In non-knock regions, the pump operates at minimal power and the lowest flow rate to reduce unnecessary energy consumption. In knock-prone regions (low-speed medium-high load and high-speed medium-low load regions), the strategies prioritize suppressing knock tendency while minimizing power consumption. Therefore, the electronic main water pump never operates at full power in these regions.

CN110805487B provides a method for controlling an electronic main water pump of an engine. The method includes: obtaining a target temperature of a water outlet of the engine and a basic pump speed of the electronic main water pump; obtaining a PID control correction coefficient based on the target temperature of the water outlet of the engine and a measured temperature of the water outlet of the engine; obtaining an environment temperature correction coefficient, and obtaining a target speed of the electronic main water pump based on the basic pump speed of the electronic main water pump, the PID control correction coefficient, and the environment temperature correction coefficient; and controlling the electronic main water pump of the engine by using the target speed of the electronic main water pump. The patent further provides a system for controlling an electronic main water pump of an engine. In the patent, the control of the target speed of the electronic main water pump is performed in two steps. In the first step, the target speed of an electronic fan and a basic pump speed are output to realize pre-control, thereby improving the system responsiveness. In the second step, the basic pump speed is corrected based on PID and an environment temperature together such that the control precision is improved.

CN106979061A discloses a control method for an electronic main water pump of an engine, including the following steps: after a vehicle is powered on, determining a current mode of the electronic main water pump by detecting a coolant temperature sensor and an engine speed; acquiring a current vehicle speed of the vehicle, a current flow rate of the electronic main water pump, load of the engine, and speed data of the engine in real time, and obtaining a thermal assessment parameter; obtaining a correction value for adjusting the electronic main water pump in a normal operating mode or a fault mode; and obtaining an optimization and adjustment time based on a change trend of the thermal assessment parameter; and optimizing and adjusting the electronic main water pump based on the correction value and the optimization and adjustment time.

In the foregoing patent, the objective of controlling the electronic main water pump is to precisely control an actual coolant temperature of the engine to precisely follow a target coolant temperature under different operating conditions. The target coolant temperature is measured on an engine test bench using a median engine for calibration, thereby ensuring that under the condition of the target coolant temperature, the engine operates at the knock limit, and the engine has minimum fuel consumption under part-load conditions or maximum power output under full-load conditions. Therefore, none of the foregoing invention patents has considered that during the mass production and application of engines, based on a target coolant temperature calibrated and determined on a test bench, after knock occurs in knock-prone operating condition regions, a coolant flow rate of an engine can be improved by using the remaining cooling capacity of an electronic main water pump.

As seen from a test bench calibration process of a main control map of a target coolant temperature of an electronic main water pump, the impacts of knock and a coolant temperature on operating power of the main water pump clearly have been considered. For engines using the Atkinson cycle with high compression ratios, parameters affecting engine knock, such as deviations in a static compression ratio of an engine, deviations in intake and exhaust phases, deviations in flow resistance coefficients of cylinder block/head water jackets, and deviations in flow rate characteristics of an electronic main water pump, may still lead to knock combustion in mass-produced engines with deviations from design medians, even when these deviations remain within design tolerance limits. In existing Engine Management System (EMS) logic, for mass-produced engines, engine knock can only be addressed through a knock diagnostic function. Once knock combustion is detected, an ignition angle of an affected cylinder is retarded to mitigate knock tendency. For severe knock, an adaptive learning approach is employed to preemptively retard an ignition angle to prevent knock. However, in both approaches, retarding an ignition angle reduces thermal efficiency and compromises engine power output.

### Summary

An objective of the present application is to provide a control method and apparatus for an electronic main water pump of an engine and a storage medium, to resolve the problem in the prior art that engines using the Atkinson cycle with high compression ratios are prone to degradation of power output and degradation of engine thermal efficiency caused by knock.

To achieve the foregoing objective, the technical solutions adopted in the present application are as follows:
According to a first aspect, embodiments of the present application provide a control method for an electronic main water pump of an engine, including:
S1: obtaining a first parameter set and knock compensation parameters of an engine in a vehicle, and determining whether an electronic main water pump in the vehicle can activate closed-loop control based on a target coolant temperature based on the first parameter set and the knock compensation parameters, and if the determination result is yes, performing S2;
S2: determining whether a condition for enabling a knock compensation function is met based on the first parameter set and the knock compensation parameters, and if the determination result is yes, performing S3, or if the determination result is no, performing S5;
S3: determining whether to perform knock compensation based on a knock compensation control offset in the knock compensation parameters, and if the knock compensation control offset is greater than a preset value, performing the knock compensation, and performing S4, or otherwise, performing S5;
S4: switching a closed-loop control strategy based on the target coolant temperature to an open-loop control strategy based on the target coolant temperature, and controlling operation of the electronic main water pump through a first control parameter determined by the open-loop control strategy, to perform thermal management on the engine; and
S5: enabling the closed-loop control strategy based on the target coolant temperature, and controlling operation of the electronic main water pump through a second control parameter determined by the closed-loop control strategy, to perform the thermal management on the engine.

With reference to the first aspect, in some optional embodiments, the first parameter set includes a vehicle speed, an engine speed, engine load, an engine coolant temperature, a knock identification flag bit, and an ignition retard angle of a cylinder caused by knock at a current moment, and the knock compensation parameters include a knock compensation control module activation flag and a knock compensation control offset.

With reference to the first aspect, in some optional embodiments, in Step S4, the first control parameter is a sum of the pre-stored latest output value obtained in the previous calculation cycle through closed-loop control and the knock compensation control offset.

With reference to the first aspect, in some optional embodiments, in Step S5, the second control parameter is a sum of a pre-control MAP value of the electronic main water pump and an output value of closed-loop PID regulation of the target coolant temperature.

With reference to the first aspect, in some optional embodiments, control of the knock compensation includes:
A1: based on a second parameter set and an operating condition setting range of the engine, determining an operating region of the knock compensation, and determining whether to enable the knock compensation function, and if the determination result is yes, enabling the knock compensation function to perform A2, or if the determination result is no, indicating that a speed compensation value of the electronic main water pump caused by knock is equal to 0, skipping enabling the knock compensation function, and performing A4;
A2: if it is detected that knock occurs in at least one cylinder and an ignition retard angle of the cylinder caused by knock exceeds a threshold, performing A3, or if no knock is detected, indicating that a compensation value of the electronic main water pump caused by knock is equal to a corresponding current value of a learn register of the electronic main water pump in a current operating condition region, performing A4;
A3: performing learn value update on the learn register of the corresponding electronic main water pump in the current operating condition region, where the updated learn value of the register is equal to a sum of a previous value of the register and a self-learning offset, and performing A4; and
A4: comparing a knock compensation value obtained in A1, A2, or A3 with a speed margin or flow rate margin under current operating conditions, and selecting the smaller value as a final value output of the knock compensation function.

With reference to the first aspect, in some optional embodiments, the second parameter set includes an engine coolant temperature, an engine speed, and engine load, and the operating condition setting range of the engine is: the engine coolant temperature is greater than a first temperature and less than a second temperature, and water pump working efficiency in a base map of the electronic main water pump corresponding to the engine speed and the engine load is less than a preset maximum power.

With reference to the first aspect, in some optional embodiments, the self-learning offset is a preset water pump speed or a preset water pump flow rate.

With reference to the first aspect, in some optional embodiments, the threshold is set between a first crankshaft angle and a second crankshaft angle.

According to a second aspect, embodiments of the present application provide a control apparatus for an electronic main water pump of an engine, including:
a closed-loop control determination module, configured to obtain a first parameter set and knock compensation parameters of an engine in a vehicle, and determine whether an electronic main water pump in the vehicle can activate closed-loop control based on a target coolant temperature based on the first parameter set and the knock compensation parameters;
a compensation condition determination module, configured to: if the determination result of the closed-loop control determination module is yes, determine whether a condition for enabling a knock compensation function is met based on the first parameter set and the knock compensation parameters;
a knock compensation determination module, configured to: if the determination result of the compensation condition determination module is yes, determine whether to perform knock compensation based on a knock compensation control offset in the knock compensation parameters; if the determination result of the compensation condition determination module is no, enable a closed-loop control strategy based on the target coolant temperature; if the knock compensation control offset is greater than a preset value, perform the knock compensation, and switch closed-loop control based on the target coolant temperature to open-loop control based on the target coolant temperature; and if the knock compensation control offset is less than equal to the preset value, enable the closed-loop control strategy based on the target coolant temperature.

According to a third aspect, embodiments of the present application provide a computer storage medium. The computer storage medium stores a computer program, and when the computer program is run on a computer, the foregoing control method for an electronic main water pump of an engine can be performed.

The beneficial effects of the present application are as follows:
In the present application, on the basis of existing closed-loop control based on a target coolant temperature, an auxiliary function of using a cooling capacity margin of an electronic main water pump under existing operating conditions to suppress existing knock is added. To achieve the objective of reducing a coolant temperature using a cooling capacity margin to suppress knock, in the present application, when the auxiliary function of suppressing knock is enabled as intense knock occurs, an open-loop strategy is adopted for coolant temperature control of an engine, and a closed-loop control strategy is maintained for the coolant temperature control of the engine when no knock occurs.

### Brief Description of the Drawings

FIG. 1 is a diagram of control logic of a control method for an electronic main water pump of an engine according to the present application;
FIG. 2 is a diagram of knock compensation logic of a control method for an electronic main water pump of an engine according to the present application; and
FIG. 3 is a schematic diagram of parts of a control apparatus for an electronic main water pump of an engine according to the present application.

Where: 10, closed-loop control determination module; 20, compensation condition determination module; and 30, knock compensation determination module.

### Detailed Description

The embodiments of the present application are described below with reference to the accompanying drawings and optional embodiments, and those skilled in the art can easily understand other advantages and efficacy of the present application through the content disclosed in this specification. The present application may also be implemented or applied through other different specific embodiments, and various modifications or changes may also be made to various details in this specification based on different views and applications without departing from the spirit of the present application. It should be understood that the optional embodiments are only used for describing the present application rather than to limit the scope of protection of the present application.

It should be noted that the drawings provided in the following embodiments schematically describe the basic concept of the present application, and only the components related to the present application are shown in the drawings, which are not drawn in accordance with the number, shape, and size of the components in actual implementation, and the actual implementation of the components, the number, and the proportion of the components may be changed arbitrarily, and the layout of the components may be more complex.

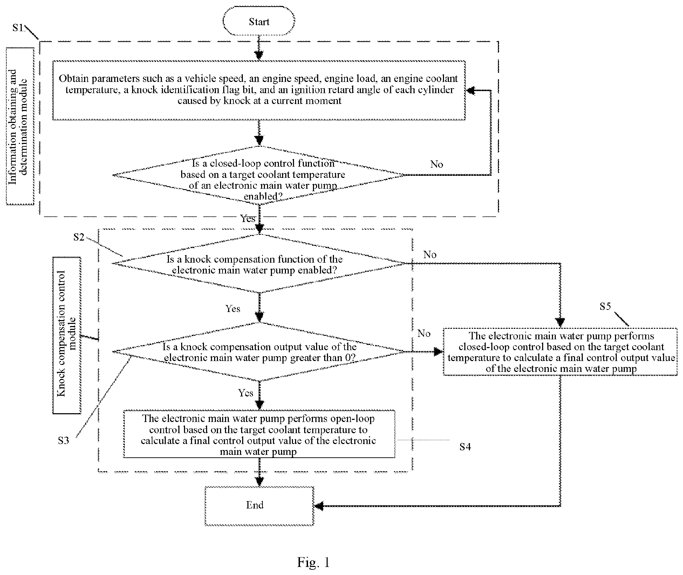

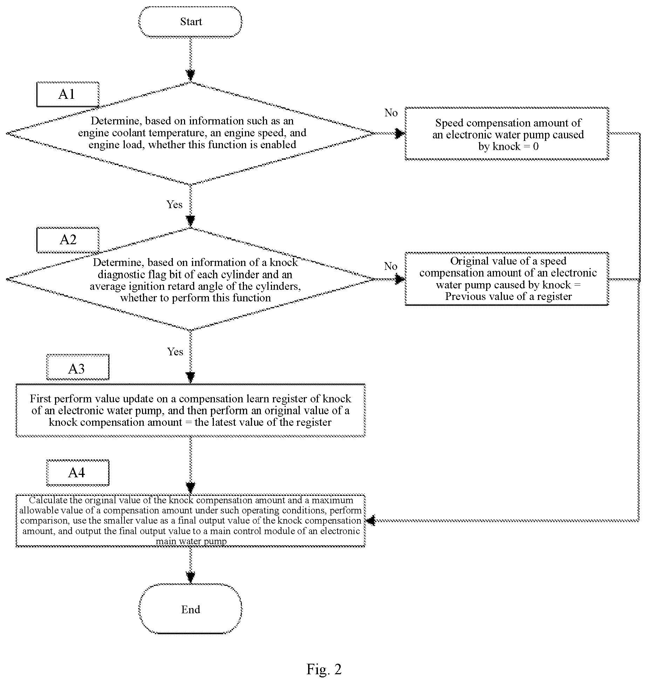

As shown in FIG. 1 and FIG. 2, embodiments of the present application provide a control method for an electronic main water pump of an engine, including the following steps:
S1: obtaining a first parameter set and knock compensation parameters of an engine in a vehicle, and determining whether an electronic main water pump in the vehicle can activate closed-loop control based on a target coolant temperature based on the first parameter set and the knock compensation parameters, and if the determination result is yes, performing S2;
S2: determining whether a condition for enabling a knock compensation function is met based on the first parameter set and the knock compensation parameters, and if the determination result is yes, performing S3, or if the determination result is no, performing S5;
S3: determining whether to perform knock compensation based on a knock compensation control offset in the knock compensation parameters, and if the knock compensation control offset is greater than a preset value, performing the knock compensation, and performing S4, or otherwise, performing S5;
S4: switching a closed-loop control strategy based on the target coolant temperature to an open-loop control strategy based on the target coolant temperature, and controlling operation of the electronic main water pump through a first control parameter determined by the open-loop control strategy, to perform thermal management on the engine; and
S5: enabling the closed-loop control strategy based on the target coolant temperature, and controlling operation of the electronic main water pump through a second control parameter determined by the closed-loop control strategy, to perform the thermal management on the engine.

In Step S1, a first parameter set and knock compensation parameters of an engine in a vehicle are obtained, and it is determined whether an electronic main water pump in the vehicle can activate closed-loop control based on a target coolant temperature based on the first parameter set and the knock compensation parameters, and if the determination result is yes, S2 is performed. The first parameter set includes parameters such as a vehicle speed, an engine speed, engine load, an engine coolant temperature, a knock identification flag bit, and an ignition retard angle of a cylinder caused by knock at a current moment. The knock compensation parameters include parameters such as a knock compensation control module activation flag and a knock compensation control offset. Specifically, an information obtaining and determination module matching the engine obtains the parameters such as the vehicle speed, the engine speed, the engine load, the engine coolant temperature, the knock identification flag bit, and the ignition retard angle of each cylinder caused by knock at the current moment and the parameters (including the parameters such as the knock compensation control module activation flag and the knock compensation control offset) output by the knock compensation control module. Based on the foregoing information, it is determined whether control of the main water pump can enter a functional module of closed-loop control based on a target coolant temperature. If the determination result is yes, S2 is performed. When the vehicle is in some special states, for example, in a process of warm-up of the engine after cold start, in this case, the engine coolant temperature is low, and the electronic main water pump usually operates at a minimum safety speed, thereby facilitating quick temperature rise. In this case, an engine cooling system neither needs to nor can perform closed-loop control based on a target coolant temperature. The warm-up of the engine needs to end before a state of the closed-loop control based on the target coolant temperature can be entered.

In Step S2: It is determined whether a condition for enabling a knock compensation function is met based on the first parameter set and the knock compensation parameters, and if the determination result is yes, S3 is performed, or if the determination result is no, S5 is performed. The information obtaining and determination module continues to determine, based on the foregoing information, whether a current state meets a condition for enabling a module of the knock compensation function of the electronic main water pump. For a determination process, refer to an electronic main water pump compensation control method, device, and system, a vehicle, a medium, and equipment proposed in Application No. 202310120320.X. Details are not excessively described herein. If the determination result is yes, S3 is performed; or if the determination result is no, S5 is performed.

In Step S3: It is determined whether to perform knock compensation based on a knock compensation control offset in the knock compensation parameters, and if the knock compensation control offset is greater than a preset value, the knock compensation is performed, and S4 is performed, or otherwise, S5 is performed. In the present application, the preset value is 0. The knock compensation control module performs determination based on a current knock compensation control offset in the knock compensation control module. If this offset is greater than 0, it indicates that in this case, it is necessary to perform knock compensation, and S4 is performed. If the determination result is no, S5 is performed.

In Step S4, a closed-loop control strategy based on the target coolant temperature is switched to an open-loop control strategy based on the target coolant temperature, and operation of the electronic main water pump is controlled through a first control parameter determined by the open-loop control strategy, to perform thermal management on the engine. The first control parameter is a sum of the pre-stored latest output value obtained in the previous calculation cycle through closed-loop control and the knock compensation control offset. The first control parameter is a final output value required for control of the electronic main water pump.

In Step S5, the open-loop control strategy based on the target coolant temperature is enabled, thereby improving the cooling intensity and thermal efficiency of the engine. The main water pump is started based on the closed-loop control based on the target coolant temperature strategy. In this case, it is calculated based on the closed-loop strategy that an output value = a pre-control MAP value of the electronic main water pump + an output value of closed-loop PID regulation of the target coolant temperature. The second control parameter and the first control parameter have consistent types, and are both final output values required for the control of the electronic main water pump.

In the present application, on the basis of a conventional control strategy of an existing electronic main water pump, a characteristic that a cooling capacity of a water pump in an engine with an electronic main water pump has a margin in medium and low-load knock sensitive regions is used. When knock occurs, open-loop control is performed on a target coolant temperature under current operating conditions, and the capacity margin of the main water pump is used to improve cooling intensity under knock operating conditions, thereby mitigating knock tendency, and improving engine thermal efficiency.

It should be noted that in FIG. 2, in Step S3, a specific strategy of the knock compensation control module is as follows: First, each time when the engine is powered off, an initial value assigned to a learn register of the electronic main water pump caused by knock mentioned in the present application is 0. It is ensured that each time when the engine is powered on to operate, the initial value of the register is 0. Next, after the engine is started, thee following steps are performed:
A1: based on a second parameter set and an operating condition setting range of the engine, determining an operating region of the knock compensation, and determining whether to enable the knock compensation function, and if the determination result is yes, enabling the knock compensation function to perform A2, or if the determination result is no, indicating that a speed compensation value of the electronic main water pump caused by knock is equal to 0, skipping enabling the knock compensation function, and performing A4;
A2: if it is detected that knock occurs in at least one cylinder and an ignition retard angle of the cylinder caused by knock exceeds a threshold, performing A3, or if no knock is detected, indicating that a compensation value of the electronic main water pump caused by knock is equal to a corresponding current value of a learn register of the electronic main water pump in a current operating condition region, performing A4;
A3: performing learn value update on the learn register of the corresponding electronic main water pump in the current operating condition region, where the updated learn value of the register is equal to a sum of a previous value of the register and a self-learning offset, and performing A4; and
A4: comparing a knock compensation value obtained in A1, A2, or A3 with a speed margin or flow rate margin under current operating conditions, and selecting the smaller value as a final value output of the knock compensation function.

In Step A1, based on a second parameter set and an operating condition setting range of the engine, an operating region of the knock compensation is determined, and it is determined whether to enable the knock compensation function, and if the determination result is yes, the knock compensation function is enabled to perform A2, or if the determination result is no, indicating that a speed compensation value of the electronic main water pump caused by knock is equal to 0, the knock compensation function is not enabled, and A4 is performed. If the engine coolant temperature under the current operating conditions is less than a threshold T or the engine speed under the current operating conditions does not meet a setting range or the engine load under the current operating conditions does not meet a setting range, the speed compensation amount value of the electronic main water pump caused by knock is equal to 0, A4 is performed. If the current engine coolant temperature is greater than T and the engine speed under the current operating conditions meets the setting range and the engine load under the current operating conditions meets the setting range, the compensation function of the electronic main water pump caused by knock is enabled, and A2 is performed. The operating condition ranges determined for the engine speed and load are approximately confirmed using a standard that an operating power of a water pump in a base map of the electronic main water pump is less than 0.9 times a maximum power. The threshold T of the engine coolant temperature is generally greater than a first temperature and less than a second temperature. The first temperature is 60°C, and the second temperature is 80°C.

In Step A2: If it is detected that knock occurs in at least one cylinder and an ignition retard angle of the cylinder caused by knock exceeds a threshold, A3 is performed, or if no knock is detected, indicating that a compensation value of the electronic main water pump caused by knock is equal to a corresponding current value of a learn register of the electronic main water pump in a current operating condition region, A4 is performed. If a knock diagnostic flag bit of one or more cylinders is set and an average value of ignition retard angles of the cylinder caused by knock exceeds a threshold A, a compensation function flag bit of the electronic main water pump caused by knock is set, and A3 is performed. If the compensation function flag bit of the electronic main water pump caused by knock is cleared, the compensation value of the electronic main water pump caused by knock is equal to a previous value of a compensation learn register of the electronic main water pump caused by knock. If no knock is detected, indicating that the compensation value of the electronic main water pump caused by knock is equal to the corresponding current value of the learn register of the electronic main water pump in the current operating condition region, A4 is performed. The threshold A for the ignition retard angle is generally set to a crankshaft angle between -3 degrees and -6 degrees.

In Step A3, learn value update is performed on the learn register of the corresponding electronic main water pump in the current operating condition region, where the updated learn value of the register is equal to a sum of a previous value of the register and a self-learning offset, and A4 is performed. Specifically, it is detected that knock occurs in at least one cylinder under the current operating conditions and the ignition retard angle caused by knock exceeds the threshold A, the learn register of the electronic main water pump corresponding to the current operating condition region performs learn value update once, and an updated value of the register is equal to the previous value of the register plus the self-learning offset, and next, A4 is performed. The compensation learn register of the main water pump performs region division at fixed intervals based on speed and load ranges determined in A1, and the regions are sequentially named according to a particular rule. Each register corresponds to one operating condition region obtained through division. The self-learning offset of the register is a preset water pump speed or a preset water pump flow rate. The self-learning offset of the register is generally set to 0.1 times a maximum speed or 0.1 a maximum flow rate of the electronic main water pump.

In Step A4: A knock compensation value obtained in A1, A2, or A3 is compared with a speed margin or flow rate margin under current operating conditions, and the smaller value is selected as a final value output of the knock compensation function. The compensation value of the electronic main water pump caused by knock obtained in each of the first steps is compared with a margin of electronic main water pump under the current operating conditions, and the smaller value is selected as a compensation value of the electronic main water pump caused by knock under the current operating conditions in this function to be output to a main control module of the electronic main water pump. The margin of the electronic main water pump under the current operating conditions is equal to a difference obtained by subtracting a required speed or flow rate of the electronic main water pump output by the main control module of the electronic main water pump from the maximum speed or flow rate of electronic main water pump.

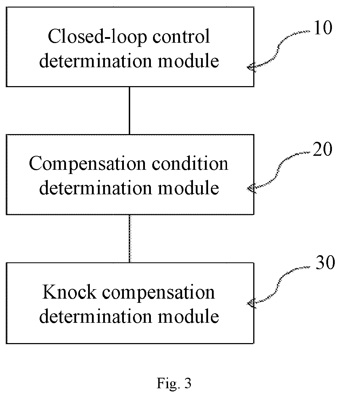

With reference to FIG. 3, the present application further provides a control apparatus for an electronic main water pump of an engine. The apparatus includes at least one software functional module stored in a storage module in the form of software or firmware, or embedded in an operating system (OS) of a control device. A closed-loop control determination module 10 is configured to execute executable modules stored in the storage module, such as software functional modules and computer program modules included in the control apparatus for an electronic main water pump of an engine.

The apparatus further includes the closed-loop control determination module 10, a compensation condition determination module 20, and a knock compensation determination module 30. The functions of the modules are as follows:
The closed-loop control determination module 10 is configured to obtain a first parameter set and knock compensation parameters of an engine in a vehicle, and determine whether an electronic main water pump in the vehicle can activate closed-loop control based on a target coolant temperature based on the first parameter set and the knock compensation parameters.

The compensation condition determination module 20 is configured to: if the determination result of the closed-loop control determination module 10 is yes, determine whether a condition for enabling a knock compensation function is met based on the first parameter set and the knock compensation parameters.

The knock compensation determination module 30 is configured to: if the determination result of the compensation condition determination module 20 is yes, determine whether to perform knock compensation based on a knock compensation control offset in the knock compensation parameters; if the determination result of the compensation condition determination module 20 is no, enable a closed-loop control strategy based on the target coolant temperature; if an output offset of the electronic main water pump is greater than a preset value, perform the knock compensation, and switch closed-loop control based on the target coolant temperature to open-loop control based on the target coolant temperature; and if the knock compensation control offset is less than equal to the preset value, enable the closed-loop control strategy based on the target coolant temperature.

In this embodiment, the storage module may be, but is not limited to, a random access memory, a read-only memory, a programmable read-only memory, an erasable programmable read-only memory, or an electrically erasable programmable read-only memory. In this embodiment, the storage module may be configured to store multiple preset thresholds in the closed-loop control determination module 10 and the compensation condition determination module 20. Additionally, the storage module may further be configured to store programs, which are executed by a processing module upon receiving an execution instruction.

Embodiments of the present application further provide a computer storage medium. The computer-readable storage medium stores a computer program, and when the computer program is run on a computer, the computer is enabled to perform the control method for an electronic main water pump of an engine in the foregoing embodiments.

Through the description of the above embodiments, those skilled in the art can clearly understand that the present application can be implemented by hardware, or by means of software plus a necessary general-purpose hardware platform. Based on such understanding, the technical solution of the present application may be embodied in the form of a software product. The software product may be stored in a non-volatile storage medium (which may be a CD-ROM, a USB flash drive, a removable hard disk, etc.) and includes several instructions configured to cause a computer device (which may be a personal computer, an electronic device, or a network device) to perform the methods described in various implementation scenarios of the present application.

In summary, the present application provides a control method and apparatus for an electronic main water pump of an engine, and a storage medium. In the control method, steps of the method include: S1: obtaining a first parameter set and knock compensation parameters of an engine in a vehicle, and determining whether an electronic main water pump in the vehicle can activate closed-loop control based on a target coolant temperature based on the first parameter set and the knock compensation parameters, and if the determination result is yes, performing S2; S2: determining whether a condition for enabling a knock compensation function is met based on the first parameter set and the knock compensation parameters, and if the determination result is yes, performing S3, or if the determination result is no, performing S5; S3: determining whether to perform knock compensation based on a knock compensation control offset in the knock compensation parameters, and if the knock compensation control offset is greater than a preset value, performing the knock compensation, and performing S4, or otherwise, performing S5; S4: switching a closed-loop control strategy based on the target coolant temperature to an open-loop control strategy based on the target coolant temperature, and controlling operation of the electronic main water pump through a first control parameter determined by the open-loop control strategy, to perform thermal management on the engine; and S5: enabling the closed-loop control strategy based on the target coolant temperature, and controlling operation of the electronic main water pump through a second control parameter determined by the closed-loop control strategy, to perform the thermal management on the engine. In the present application, on the basis of a conventional control strategy of an existing electronic main water pump, a characteristic that a cooling capacity of a water pump in an engine with an electronic main water pump has a margin in medium and low-load knock sensitive regions is used. When knock occurs, open-loop control is performed on a target coolant temperature under current operating conditions, and the capacity margin of the main water pump is used to improve cooling intensity under knock operating conditions, thereby mitigating knock tendency, and improving engine thermal efficiency.

The above embodiments are merely preferred embodiments provided to fully illustrate the present application, and the scope of protection of the present application is not limited thereto. Any equivalent substitution or modification made by those skilled in the art based on the present application shall fall within the scope of protection of the present application.

## Claims

1. A control method for an electronic main water pump of an engine, comprising:
S1: obtaining a first parameter set and knock compensation parameters of an engine in a vehicle, and determining whether an electronic main water pump in the vehicle can activate closed-loop control based on a target coolant temperature according to the first parameter set and the knock compensation parameters, and if the determination result is yes, performing S2;
S2: determining whether a condition for enabling a knock compensation function is met based on the first parameter set and the knock compensation parameters, and if the determination result is yes, performing S3, or if the determination result is no, performing S5;
S3: determining whether to perform knock compensation based on a knock compensation control offset in the knock compensation parameters, and if the knock compensation control offset is greater than a preset value, performing the knock compensation, and performing S4, or otherwise, performing S5;
S4: switching a closed-loop control strategy based on the target coolant temperature to an open-loop control strategy based on the target coolant temperature, and controlling operation of the electronic main water pump through a first control parameter determined by the open-loop control strategy, to perform thermal management on the engine; and
S5: enabling the closed-loop control strategy based on the target coolant temperature, and controlling operation of the electronic main water pump through a second control parameter determined by the closed-loop control strategy, to perform the thermal management on the engine.

2. The control method for an electronic main water pump of an engine according to claim 1, wherein the first parameter set comprises a vehicle speed, an engine speed, engine load, an engine coolant temperature, a knock identification flag bit, and an ignition retard angle of a cylinder caused by knock at a current moment, and the knock compensation parameters comprise a start flag bit of a knock compensation control module and the knock compensation control offset.

3. The control method for an electronic main water pump of an engine according to claim 1, wherein in Step S4, the first control parameter is a sum of the pre-stored latest output value obtained in the previous calculation cycle through closed-loop control and the knock compensation control offset.

4. The control method for an electronic main water pump of an engine according to claim 1, wherein in Step S5, the second control parameter is a sum of a pre-control MAP value of the electronic main water pump and an output value of closed-loop PID regulation of the target coolant temperature.

5. The control method for an electronic main water pump of an engine according to claim 1, wherein control of the knock compensation comprises:
A1: based on a second parameter set and an operating condition setting range of the engine, determining an operating region of the knock compensation, and determining whether to enable the knock compensation function, and if the determination result is yes, enabling the knock compensation function to perform A2, or if the determination result is no, indicating that a speed compensation value of the electronic main water pump caused by knock is equal to 0, skipping enabling the knock compensation function, and performing A4;
A2: if it is detected that knock occurs in at least one cylinder and an ignition retard angle of the cylinder caused by knock exceeds a threshold, performing A3, or if no knock is detected, indicating that a compensation value of the electronic main water pump caused by knock is equal to a corresponding current value of a learn register of the electronic main water pump in a current operating condition region, performing A4;
A3: performing learn value update on the learn register of the corresponding electronic main water pump in the current operating condition region, wherein the updated learn value of the register is equal to a sum of a previous value of the register and a self-learning offset, and performing A4; and
A4: comparing a knock compensation value obtained in A1, A2, or A3 with a speed margin or flow rate margin under current operating conditions, and selecting the smaller value as a final value output of the knock compensation function.

6. The control method for an electronic main water pump of an engine according to claim 5, wherein the second parameter set comprises an engine coolant temperature, an engine speed, and engine load, and the operating condition setting range of the engine is: the engine coolant temperature is greater than a first temperature and less than a second temperature, and water pump working efficiency in a base map of the electronic main water pump corresponding to the engine speed and the engine load is less than a preset maximum power.

7. The control method for an electronic main water pump of an engine according to claim 5, wherein in Step A3, the self-learning offset is a preset water pump speed or a preset water pump flow rate.

8. The control method for an electronic main water pump of an engine according to claim 5, wherein in Step A2, the threshold is set between a first crankshaft angle and a second crankshaft angle.

9. A control apparatus for an electronic main water pump of an engine, comprising:
a closed-loop control determination module (10), configured to obtain a first parameter set and knock compensation parameters of an engine in a vehicle, and determine whether an electronic main water pump in the vehicle can activate closed-loop control based on a target coolant temperature based on the first parameter set and the knock compensation parameters;
a compensation condition determination module (20), configured to: if the determination result of the closed-loop control determination module (10) is yes, determine whether a condition for enabling a knock compensation function is met based on the first parameter set and the knock compensation parameters;
a knock compensation determination module (30), configured to: if the determination result of the compensation condition determination module (20) is yes, determine whether to perform knock compensation based on a knock compensation control offset in the knock compensation parameters; if the determination result of the compensation condition determination module (20) is no, enable a closed-loop control strategy based on the target coolant temperature; if the knock compensation control offset is greater than a preset value, perform the knock compensation, and switch closed-loop control based on the target coolant temperature to open-loop control based on the target coolant temperature; and if the knock compensation control offset is less than equal to the preset value, enable the closed-loop control strategy based on the target coolant temperature.

10. A computer storage medium, wherein the computer storage medium stores a computer program, and when the computer program is run on a computer, the control method for an electronic main water pump of an engine of any one of claims 1 to 8 can be performed.
